# FASCICULE DE BREVET EUROPEEN

(11) **EP 0 875 975 B1**
(45) Date de publication et mention de la délivrance du brevet: **02.07.2003**
(21) Numéro de dépôt: 98401038.9
(22) Date de dépôt: 28.04.1998
(51) Int. Cl.: H02G 3/12

(54) **"Boîte d'encastrement pour cloison sèche à patte(s) de serrage initialement d'un seul tenant, notamment pour appareillage électrique"**
Unterputzdose für elektrische Gerät in einer Wand geringer Dicke mit integrierter Spannlasche
Thin wall flush mounted box with integral clamp arm for an electrical apparatus

(30) Priorité: 30.04.1997 FR 9705410
(43) Date de publication de la demande: 04.11.1998
(73) Titulaire: LEGRAND, F-87000 Limoges (FR); LEGRAND SNC, F-87000 Limoges (FR)
(72) Inventeur: Costes, Jean-Christophe, 87270 Chaptelat (FR)
(74) Mandataire: Santarelli

(56) Documents cités:
- WO-A-96/14682
- DE-A- 3 041 919
- FR-A- 2 147 029

## Description

La présente invention concerne d'une manière générale les boîtes d'encastrement du type de celles mises en oeuvre pour encastrer un quelconque appareillage, et, par exemple, un quelconque appareillage électrique, dans une cloison sèche.

Ainsi qu'on le sait, une cloison sèche est une cloison qui, réalisée à sec à partir d'éléments préfabriqués, comporte, usuellement, à l'avant, une paroi de façade plus ou moins mince, et l'assujettissement d'une boîte d'encastrement dans une ouverture ménagée à cet effet dans cette paroi de façade se fait usuellement par pincement de cette dernière.

Pour ce pincement, les boîtes d'encastrement présentent, transversalement, en saillie vers l'extérieur, sur leur paroi latérale, sur une partie au moins du pourtour de celle-ci, un épaulement, qui est destiné à venir porter sur la surface externe de la paroi de façade à pincer, et deux pattes de serrage, qui, disposées en positions diamétralement opposées l'une par rapport à l'autre, et susceptibles d'être rapprochées de l'épaulement précédent sous le contrôle de moyens de commande, sont destinées, elles, à venir porter sur la surface interne de cette paroi de façade, pour coopération en serrage avec cet épaulement.

Le plus souvent, à ce jour, les moyens de commande des pattes de serrage sont des vis métalliques, et, pour engrener plus sûrement avec celles-ci, ces pattes de serrage sont elles-mêmes des pièces métalliques.

Cette disposition a donné et peut encore donner satisfaction.

Mais elle a pour inconvénient de nécessiter la mise en oeuvre de pièces métalliques, qui sont en pratique des pièces métalliques ouvrées, alors que, prise dans son ensemble, une boîte d'encastrement est usuellement une pièce en matière synthétique, communément dite plastique, dûment réalisée par moulage.

Mettant ainsi en oeuvre des composants de natures distinctes, une telle réalisation composite conduit inévitablement à un prix de revient initial de fabrication relativement élevé pour l'ensemble, et ce prix de revient final de cet ensemble se trouve encore alourdi par les frais de gestion et d'assemblage qu'il faut ensuite assurer pour ces divers composants.

Dans la demande de brevet internationale publiée sous No WO96/14682, les moyens de commande des pattes de serrage sont des tirettes auxquelles ces pattes de serrage sont chacune individuellement attelées, avec, intervenant entre la paroi latérale de la boîte d'encastrement et chacun des ensembles de serrage que constituent une patte de serrage et sa tirette, des moyens de crantage.

Mais, s'ils peuvent eux aussi être réalisés en matière synthétique, par moulage, ces ensembles de serrage constituent malgré tout des pièces distinctes de la boîte d'encastrement, et, outre leur prix de revient individuel de fabrication, ils impliquent, donc, comme précédemment, des frais supplémentaires de gestion et d'assemblage.

En outre, dans cette demande de brevet internationale, les moyens de crantage interviennent entre les tirettes et des cliquets venus de la paroi latérale de la boîte d'encastrement.

Ils interviennent donc à distance des pattes de serrage, au détriment de leur efficacité à l'égard de celles-ci.

Dans la demande de brevet allemand No 30 41 919, il est substitué, aux pattes de serrage, des languettes souples, qui, venues d'un seul tenant de moulage avec la paroi latérale de la boîte d'encastrement, présentent transversalement des crans pour leur coopération en serrage avec l'épaulement de celle-ci.

Mais, outre que ces crans ont nécessairement une emprise sur la paroi de façade à pincer beaucoup plus faible que celle offerte par une réelle patte de serrage, il est nécessaire de leur associer, pour leur application contre cette paroi de façade, des coins, qui, s'ils sont eux aussi venus d'un seul tenant de moulage avec les languettes concernées, nécessitent, pour leur commande, des vis métalliques, avec les inconvénients de prix de revient initial de fabrication et de frais ultérieurs de gestion et d'assemblage déjà précédemment soulignés.

La présente invention a d'une manière générale pour objet une disposition permettant d'éviter ces inconvénients.

De manière plus précise, elle a pour objet une boîte d'encastrement du genre comportant, d'une part, une paroi latérale, qui présente, transversalement, en saillie vers l'extérieur, sur une partie au moins de son pourtour, un épaulement, et, d'autre part, au moins une patte de serrage, qui, attelée à une tirette, est destinée à être rapprochée de cet épaulement pour coopération en serrage avec celui-ci, avec, intervenant entre la paroi latérale et l'ensemble de serrage que constituent la patte de serrage et sa tirette, des moyens de crantage, cette boîte d'encastrement étant d'une manière générale caractérisée en ce que, venue d'un seul tenant de moulage avec la paroi latérale, la tirette de la patte de serrage forme initialement une seule et même pièce avec cette paroi latérale, tout en étant séparable de celle-ci.

Ainsi, il est procédé, suivant l'invention, à une réalisation simultanée et monobloc de la boîte d'encastrement, de ses pattes de serrage, et des tirettes associées à celles-ci, au bénéfice du prix de revient initial de fabrication de l'ensemble.

Aucun ajout de pièces supplémentaires ni aucun assemblage n'est à assurer en sortie de presse avant le conditionnement de l'ensemble, seul intervenant, si désiré, pour faciliter ce conditionnement, et, d'une manière plus générale, pour faciliter la manutention de l'ensemble, un rabattement des tirettes et des pattes de serrage dans le volume intérieur délimité par la paroi latérale, ces tirettes et ces pattes de serrage s'étendant initialement préférentiellement en saillie vers l'extérieur par rapport à cette paroi latérale pour faciliter leur moulage.

Ce n'est donc qu'au moment de la mise en oeuvre de la boîte d'encastrement que les tirettes et les pattes de serrage qu'elle porte sont détachées de sa paroi latérale pour être mises en place sur celle-ci dans l'implantation qui y est prévue pour elles.

En pratique, les tirettes permettent alors avantageusement une fixation rapide de la boîte d'encastrement dans la cloison sèche à équiper, sans un quelconque vissage, et tout en permettant, si nécessaire, un éventuel desserrage ou un éventuel resserrage de la paroi de façade de cette cloison sèche.

Préférentiellement, les moyens de crantage prévus entre la paroi latérale et chacun des ensembles de serrage que constituent une patte de serrage et sa tirette interviennent directement, suivant l'invention, au droit de la patte de serrage.

Par exemple, suivant une forme préférée de réalisation, la paroi latérale comporte, pour ce faire, une fente, qui s'étend sur une partie au moins de sa hauteur, la patte de serrage appartient à un bloc de serrage, qui, à l'arrière de cette patte de serrage, présente au moins une rainure lui permettant d'être engagé sur l'une des lèvres de la fente de la paroi latérale, et les moyens de crantage comportent, d'une part, sur la paroi latérale, une série de crans alignés le long de cette lèvre de sa fente, et, d'autre part, sur le bloc de serrage, à la faveur de la rainure de celui-ci, au moins un cran apte à coopérer avec ceux de la paroi latérale.

Ces moyens de crantage intervenant ainsi directement au droit de la patte de serrage, leur efficacité à l'égard de celle-ci se trouve avantageusement renforcée.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une boîte d'encastrement suivant l'invention ;
la figure 2 en est une vue en plan, suivant la flèche Il de la figure 1 ;
la figure 3 en est une vue en élévation de côté, suivant la flèche III de la figure 1 ;
la figure 4 reprend, à échelle supérieure, le détail qui, relatif à une patte de serrage équipant cette boîte d'encastrement, est repéré par un encart IV sur la figure 1 ;
la figure 5 est une vue de dessous de cette patte de serrage, suivant la flèche V de la figure 4 ;
la figure 6 est, à échelle supérieure, une vue partielle en coupe axiale de la boîte d'encastrement suivant l'invention, suivant la ligne VI-VI de la figure 1 ;
la figure 7 en est une vue partielle en coupe transversale, suivant la ligne VII-VII de la figure 1 ;
la figure 8 est une vue en perspective de la boîte d'encastrement suivant l'invention, dans sa configuration de manutention et de conditionnement ;
les figures 9A, 9B sont des vues en perspective illustrant deux phases successives de sa mise en oeuvre ;
la figure 10 est, suivant la ligne X-X de la figure 9B, et à échelle supérieure, une vue partielle en coupe axiale illustrant cette mise en oeuvre.

Tel qu'illustré sur ces figures, la boîte d'encastrement 10 suivant l'invention comporte, globalement, de manière connue en soi, une paroi de fond 11 et une paroi latérale 12.

Dans la forme de réalisation représentée, la paroi latérale 12 est cylindrique, avec des génératrices qui s'étendent sensiblement perpendiculairement à la paroi de fond 11, et, transversalement, elle a un contour circulaire.

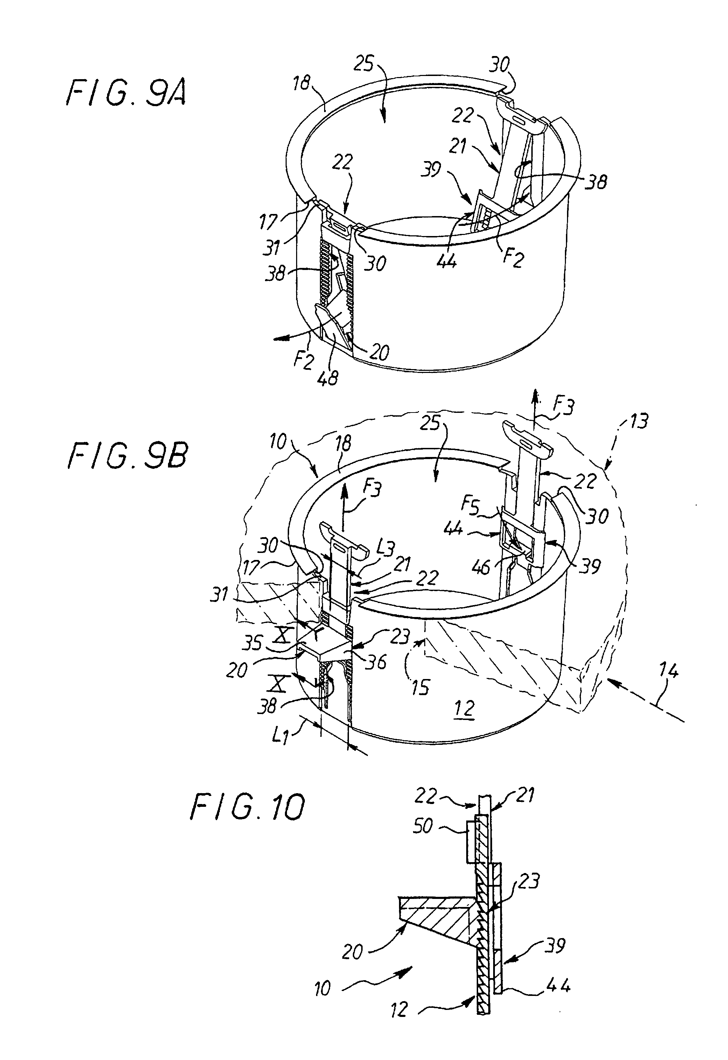

Tel que schématisé en traits interrompus sur la figure 9B, la boîte d'encastrement 10 suivant l'invention est destinée à l'équipement d'une cloison sèche 13 présentant, à l'avant, une paroi de façade 14 plus ou moins mince, pour l'encastrement, dans cette cloison sèche 13, d'un quelconque appareillage, et, par exemple, d'un quelconque appareillage électrique non représenté.

De manière connue en soi, pour la mise en place d'une telle boîte d'encastrement 10 dans la cloison sèche 13, il est découpé, dans la paroi de façade 14 de cette cloison sèche 13, par exemple à la scie cloche, une ouverture 15 de diamètre juste suffisant pour y permettre l'engagement de cette boîte d'encastrement 10.

La boîte d'encastrement 10 suivant l'invention n'a pas été représentée dans tous ses détails sur les figures, et elle ne sera pas non plus décrite dans tous ses détails ici.

Seuls en ont été représentés, et seuls donc seront décrits ici, les éléments nécessaires à la compréhension de l'invention.

De manière connue en soi, la paroi latérale 12 de la boîte d'encastrement 10 suivant l'invention présente, transversalement, en saillie vers l'extérieur, sur une partie au moins de son pourtour, un épaulement 17, qui est destiné à limiter l'engagement de cette boîte d'encastrement 10 dans la cloison sèche 13 à équiper, en venant pour ce faire prendre appui, à la manière d'une garde, sur la paroi de façade 14 de celle-ci, autour de l'ouverture 15 de cette paroi de façade 14.

Dans la forme de réalisation représentée, et de manière connue en soi, cet épaulement 17 appartient à une collerette 18, qui s'étend globalement annulairement le long du bord libre de la paroi latérale 12.

De manière connue en soi, enfin, la boîte d'encastrement 10 suivant l'invention comporte au moins une patte de serrage 20, qui, attelée à une tirette 21, et ainsi susceptible d'être déplacée le long de la paroi latérale 12, suivant des modalités décrites plus en détail ultérieurement, est destinée à être rapprochée de l'épaulement 17, pour coopération en serrage avec celui-ci, avec, intervenant entre la paroi latérale 12 et l'ensemble de serrage 22 que constituent la patte de serrage 20 et sa tirette 21, des moyens de crantage 23, figures 9B et 10.

Préférentiellement, et cela est le cas dans la forme de réalisation représentée, il y a, en pratique, en positions diamétralement opposées l'une par rapport à l'autre, deux pattes de serrage 20, avec, associée à chacune d'elles, une tirette 21.

Autrement dit, il y a, dans la forme de réalisation représentée, deux ensembles de serrage 22.

En pratique, ces deux ensembles de serrage 22 sont identiques l'un à l'autre.

Seul l'un d'eux, et, donc, seules l'une des pattes de serrage 20 et sa tirette 21, seront décrits dans ce qui suit.

Suivant l'invention, venue d'un seul tenant de moulage avec la paroi latérale 12 de la boîte d'encastrement 10, la tirette 21 de la patte de serrage 20 d'un ensemble de serrage 22 forme initialement une seule et même pièce avec cette paroi latérale 12, tout en étant séparable de celle-ci.

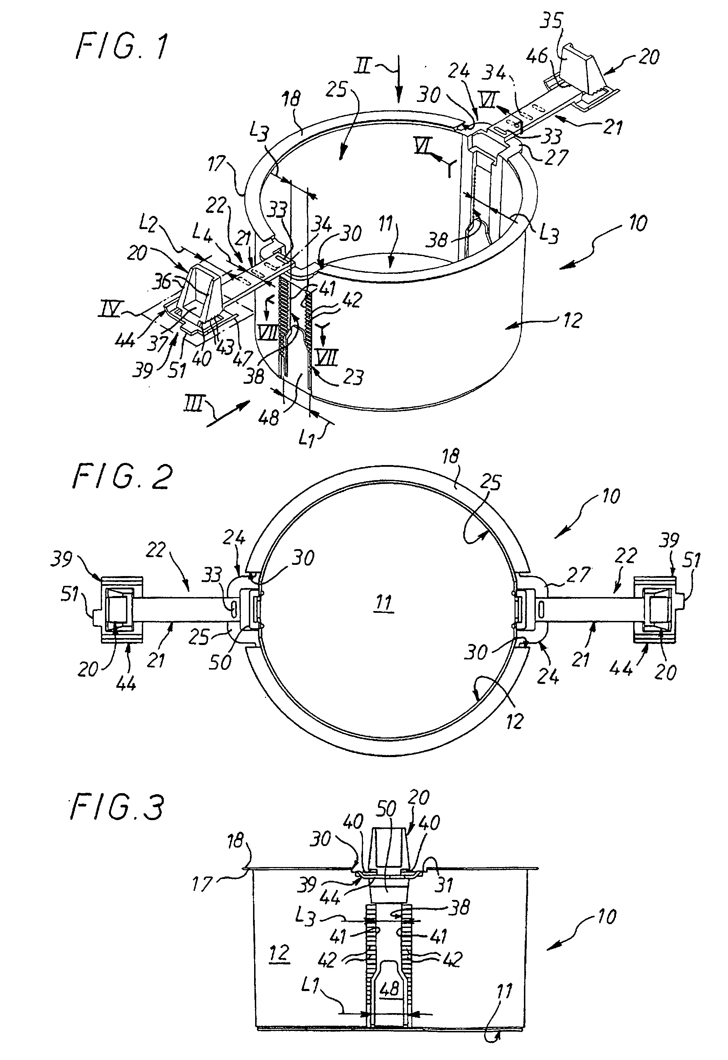

Préférentiellement, et tel que représenté sur les figures 1 à 3, la tirette 21 de la patte de serrage 20 s'étend initialement en saillie vers l'extérieur par rapport à la paroi latérale 12.

Préférentiellement, également, et cela est le cas dans la forme de réalisation représentée, cette tirette 21 se raccorde alors à la paroi latérale 12 par une zone charnière 24 apte à permettre de la rabattre dans le volume intérieur 25 délimité par la paroi latérale 12.

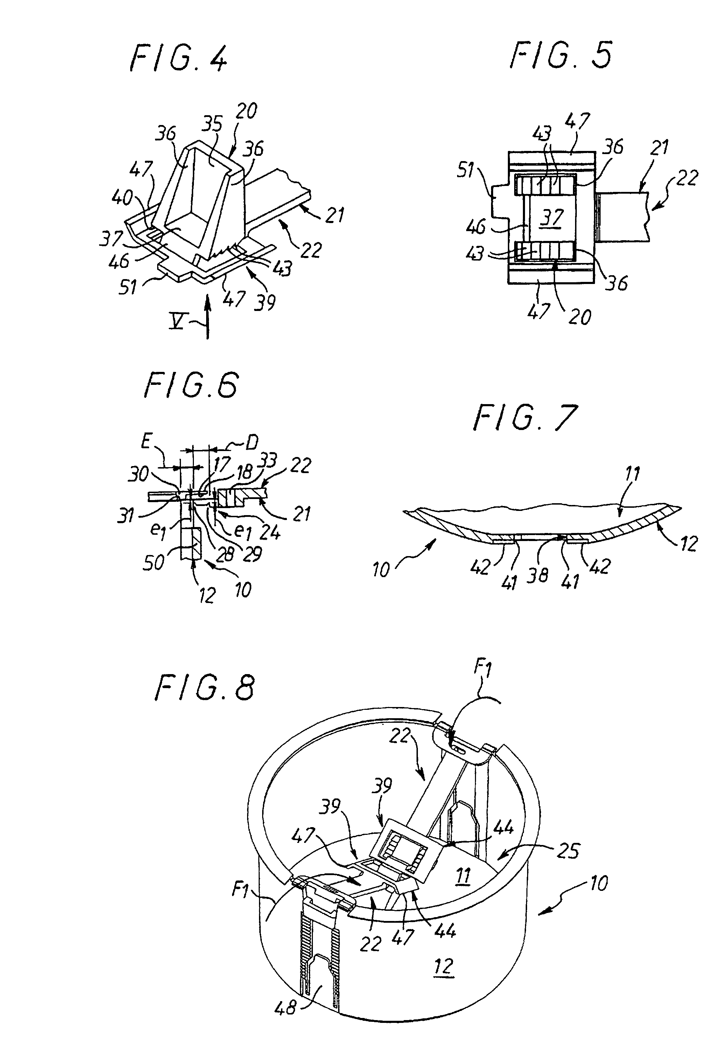

Dans la forme de réalisation représentée, la zone charnière 24 intervient à la faveur d'une traverse 27, en forme d'anse, que la tirette 21 présente à son extrémité opposée à la patte de serrage 20, et, ainsi qu'il est mieux visible sur la figure 6, elle comporte deux lignes de pliage 28, 29, qui, parallèles l'une à l'autre, sont distantes l'une de l'autre, en s'étendant l'une et l'autre dans un plan perpendiculaire aux génératrices de la paroi latérale 12.

En pratique, ces lignes de pliage 28, 29 sont matérialisées par des gorges affectant en creux la traverse 27, sur la surface inférieure de celle-ci, c'est-à-dire sur celle des surfaces de cette traverse 27 qui est tournée vers la paroi de fond 11.

Par exemple, et tel que représenté, la ligne de pliage 28 s'étend au ras de la paroi latérale 12, tandis que la ligne de pliage 29 s'étend à l'écart de celle-ci.

Dans la forme de réalisation représentée, la tirette 21 de la patte de serrage 20 se raccorde à la paroi latérale 12 le long du bord libre de celle-ci, et, pour ce faire, la collerette 18 de cette paroi latérale 12 est localement interrompue, par une échancrure 30, au droit de cette tirette 21.

Par exemple, et tel que représenté, la traverse 27 par laquelle la tirette 21 se raccorde à la paroi latérale 12 est à niveau avec la tranche 31, ainsi dégagée par l'échancrure 30, de cette paroi latérale 12.

Préférentiellement, et pour des raisons qui apparaîtront ci-après, la distance D séparant l'une de l'autre les lignes de pliage 28, 29 est au moins égale à l'épaisseur E de la paroi latérale 12 mesurée au niveau de la tranche 31 de celle-ci, figure 6.

Préférentiellement, également, la tirette 21 de la patte de serrage 20 est séparable de la paroi latérale 12 au niveau de son raccordement à celle-ci.

Pour ce faire, l'épaisseur e1 de la partie subsistante de la traverse 27 au droit de la ligne de pliage 28 est inférieure à l'épaisseur e2 de sa partie subsistante au droit de la ligne de pliage 29.

Préférentiellement, la tirette 21 de la patte de serrage 20 est relativement rigide.

Dans la forme de réalisation représentée, cette tirette 21 est rectiligne, et elle se présente sous la forme d'une bande mince, plate et lisse.

La traverse 27 par laquelle elle se raccorde à la paroi latérale 12 intervient en surépaisseur par rapport à elle.

Exception faite d'un trou 33 allongé transversalement en boutonnière au droit de cette traverse 27, la tirette 21 est pleine dans la forme de réalisation représentée.

Mais, tel que schématisé en traits interrompus sur la figure 1, et pour des raisons explicitées ultérieurement, elle peut être ajourée, de place en place, sur une partie au moins de sa longueur à compter du trou 33, par des trous 34, de même nature que ce trou 33, et parallèles à celui-ci.

Enfin, dans la forme de réalisation représentée, la tirette 21 s'étend initialement radialement par rapport à la paroi latérale 12, parallèlement à la paroi de fond 11.

Dans la forme de réalisation représentée, la patte de serrage 20 comporte une platine 35 qui, à la manière d'une console, s'étend en porte à faux à compter de la tirette 21, perpendiculairement à celle-ci.

La patte de serrage 20 comporte, en outre, deux bords tombés 36, qui s'étendent, chacun respectivement, le long des bords de la platine 35, pour le raidissement de celle-ci, et qui, dans la forme de réalisation représentée, ont une configuration en trapèze, avec une grande base à la racine de la platine 35, c'est-à-dire du côté de la tirette 21, et une petite base à l'extrémité libre de cette platine 35, c'est-à-dire du côté opposé à la tirette 21.

Une traverse 37 relie l'un à l'autre les bords tombés 36 à la racine de la platine 35, sensiblement en continuité avec la tirette 21.

Préférentiellement, et cela est le cas dans la forme de réalisation représentée, les moyens de crantage 23 interviennent directement au droit de la patte de serrage 20.

Dans la forme de réalisation représentée, la paroi latérale 12 comporte, pour chacun des ensembles de serrage 22, une fente 38, qui s'étend sur une partie au moins de sa hauteur, la patte de serrage 20 appartient à un bloc de serrage 39, qui, à l'arrière de cette patte de serrage 20, c'est-à-dire à la racine de celle-ci, présente au moins une rainure 40 lui permettant d'être engagé sur l'une des lèvres 41 de la fente 38 de la paroi latérale 12, et les moyens de crantage 23 comportent, d'une part, sur la paroi latérale 12, une série de crans 42 alignés le long de cette lèvre 41 de sa fente 38, et, d'autre part, sur le bloc de serrage 39, à la faveur de sa rainure 40, au moins un cran 43 apte à coopérer avec ceux, 42, de la paroi latérale 12.

Dans la forme de réalisation représentée, le bloc de serrage 39 comporte, dos à dos, deux rainures 40, qui interviennent, chacune respectivement, tout au long de la grande base des deux bords tombés 36 de la patte de serrage 20, le long de la tranche de ces bords tombés 36, et par lesquelles il peut être engagé sur les deux lèvres 41 de la fente 38 de la paroi latérale 12.

Conjointement, les moyens de crantage 23 comportent des crans 42 sur chacune des lèvres 41 de la fente 38 de la paroi latérale 12 et au moins un cran 43 dans chacune des rainures 40 du bloc de serrage 39.

Globalement, le bloc de serrage 39 comporte, d'un côté de ses rainures 40, la patte de serrage 20, pour coopération avec l'épaulement 17 de la paroi latérale 12, sur la surface extérieure de celle-ci, et, de l'autre côté de ses rainures 40, une contreplaque de guidage 44, pour appui sur la surface intérieure de la paroi latérale 12.

Dans la forme de réalisation représentée, cette contreplaque de guidage 44 est ajourée, en forme de cadre, pour permettre le moulage de l'ensemble.

En pratique, et ainsi qu'il est mieux visible sur la figure 4, le contour de la patte de serrage 20 s'étend, en plan, tout entier dans le contour de l'évidement interne de la contreplaque de guidage 44, exception faite de deux zones de rattachement à celle-ci, l'une qui, du côté de la tirette 21, se fait par l'intermédiaire de cette tirette 21, et l'autre qui, du côté opposé à la tirette 21, se fait par l'intermédiaire d'une languette 46.

Dans la forme de réalisation représentée, pour une application élastique de la contreplaque de guidage 44 contre la surface intérieure de la paroi latérale 12 de part et d'autre de la patte de serrage 20, les bords longitudinaux 47 de cette contreplaque de guidage 44 sont conformés en dièdre, avec leur concavité tournée vers la patte de serrage 20.

Dans la forme de réalisation représentée, les crans 42 de la paroi latérale 12 interviennent sur la surface extérieure de celle-ci, et, ainsi qu'il est mieux visible sur la figure 10, il s'agit de crans dissymétriques, ces crans 42 présentant un flanc plus raide du côté supérieur, c'est-à-dire du côté du bord libre de la paroi latérale 12, et un flanc moins raide du côté inférieur, c'est-à-dire du côté opposé au précédent.

En outre, dans cette forme de réalisation, le bloc de serrage 39 comporte, lui aussi, une série de crans 43 sur la tranche de chacun de ses bords tombés 36, et il s'agit aussi de crans dissymétriques, ces crans 43 étant complémentaires des crans 42 de la paroi latérale 12.

Dans la forme de réalisation représentée, la fente 38 de la paroi latérale 12 s'étend sur toute la hauteur de cette paroi latérale 12, suivant une génératrice de celle-ci.

Du côté opposé au bord libre de la paroi latérale 12, c'est-à-dire du côté de la paroi de fond 11, cette fente 38 est élargie, pour permettre un libre passage de la patte de serrage 20.

Elle présente donc, à ce niveau, une largeur L1 qui est au moins égale à celle L2 de la patte de serrage 20, mesurée de l'une à l'autre des surfaces extérieures des bords tombés 36 de celle-ci.

Mais, préférentiellement, et cela est le cas dans la forme de réalisation représentée, la fente 38 est, à ce niveau, c'est-à-dire du côté opposé au bord libre de la paroi latérale 12, au moins en partie occultée par une languette 48 pliable.

Dans sa partie courante, la largeur L3 de la fente est inférieure à celle L2 de la patte de serrage 20.

Mais elle est inférieure à la largeur L4 de la tirette 21, et la languette 46 a elle-même une largeur au plus égale à cette dernière.

Du côté du bord libre de la paroi latérale 12, la fente 38 de celle-ci est fermée, dans la forme de réalisation représentée, par une barrette 50, en forme d'anse, qui fait légèrement saillie sur la paroi latérale 12, et qui est propre à fournir un appui à la tirette 21 de la patte de serrage 20.

Enfin, dans la forme de réalisation représentée, les deux blocs de serrage 39 comportent, chacun, en saillie, un ergot 51, pour leur imbrication relative lorsque, comme représenté sur la figure 8, les tirettes 21 des pattes de serrage 20 sont rabattues dans le volume intérieur 25 délimité par la paroi latérale 12.

Par exemple, et tel que représenté, les ergots 51 correspondants font saillie sur le bord transversal libre des contreplaques de guidage 44, et, d'une de ces contreplaques de guidage 44 à l'autre, ils sont décalés l'un par rapport à l'autre le long de celui-ci.

Ainsi, après le moulage monobloc de la boîte d'encastrement 10 avec ses ensembles de serrage 22, c'est-à-dire avec ses pattes de serrage 20 et les tirettes 21 associées à celles-ci, tel que représenté sur les figures 1 à 3, il suffit, pour la manutention, le stockage ou le conditionnement de cette boîte d'encastrement 10, de rabattre les tirettes 21 et les pattes de serrage 20 dans le volume intérieur 25 délimité par la paroi latérale 12, suivant les flèches F1 de la figure 8, et d'imbriquer, l'un avec l'autre, par leurs ergots 51, les blocs de serrage 39 correspondants, pour que ces tirettes 21 et les pattes de serrage 20 se maintiennent dès lors d'elles-mêmes en position rabattue dans ce volume intérieur 25.

En pratique, le rabattement des tirettes 21 et des pattes de serrage 20 implique, d'abord, un pliage de 180° des ensembles de serrage 22 correspondants autour de leur ligne de pliage 28, ce qui conduit la traverse 27 de ces tirettes 21 à se superposer localement à la tranche 31 de la paroi latérale 12, et, ensuite, un pliage inférieur à 90° de ces ensembles de serrage 22 autour de leur ligne de pliage 29.

Pour la mise en oeuvre de la boîte d'encastrement 10 suivant l'invention, il peut, par exemple, être procédé comme suit.

Dans un premier temps, les tirettes 21 des pattes de serrage 20 sont séparées de la paroi latérale 12, au niveau de la ligne de pliage 28, et, préférentiellement, la partie de leur traverse 27 s'étendant entre cette ligne de pliage 28 et la ligne de pliage 29 est éliminée.

Dans un deuxième temps, les pattes de serrage 20 sont amenées à traverser la paroi latérale 12, à la faveur de la partie de plus grande largeur L1 des fentes 38 de celle-ci, tel que schématisé par des flèches F2 sur la figure 9A.

Ce faisant, les languettes 48 présentes à la base de ces fentes 38 sont refoulées, temporairement, vers l'extérieur, par pliage autour de leur zone de raccordement à la paroi de fond 11.

Lorsque les pattes de serrage 20 ont totalement franchi la paroi latérale 12, elles font saillie transversalement vers l'extérieur sur cette paroi latérale 12, en s'étendant radialement par rapport à celle-ci, parallèlement à l'épaulement 17.

Il suffit, dès lors, pour le pincement de la paroi de façade 14 de la cloison sèche 13 à équiper, et, ainsi, pour l'assujettissement de la boîte d'encastrement 10 à cette cloison sèche 13, de rapprocher de l'épaulement 17 les pattes de serrage 20, en exerçant pour ce faire une traction vers le haut sur leur tirette 21, tel que schématisé par des flèches F3 sur la figure 9B.

Ce faisant, lorsque les pattes de serrage 20 arrivent au niveau de la partie de moindre largeur L3 des fentes 38 de la paroi latérale 12, les blocs de serrage 39 auxquels elles appartiennent s'engagent par leurs rainures 40 sur les lèvres 41 de ces fentes 38, ce qui conduit les crans 43 des blocs de serrage 39 à venir en prise avec ceux 42 de la paroi latérale 12, en engrenant par encliquetage avec ceux-ci, ainsi qu'il est mieux visible pour l'un de ces blocs de serrage 39 à la figure 10.

Ainsi, arrivées au contact de la surface intérieure de la paroi de façade 14 de la cloison sèche 13, les pattes de serrage 20 se maintiennent d'elles-mêmes, de manière efficace et sûre, au niveau qui est alors le leur.

Corollairement, les languettes 48 retrouvent, par simple élasticité, leur position initiale, en assurant ainsi avantageusement à leur niveau l'étanchéité de la boîte d'encastrement 10 à l'égard des débris de dimensions notables, et, plus précisément, à l'égard de débris dont la plus petite dimension est supérieure à 1 mm.

Si désiré, le trou 33 des tirettes 21 peut être mis à profit pour faciliter l'exercice d'une traction sur celles-ci, en engageant dans ce trou 33 un quelconque outil, par exemple la lame d'un tournevis.

Bien entendu, les tirettes 21 sont ensuite arasées au niveau de la collerette 18 de la boîte d'encastrement 10.

Ainsi qu'il est aisé de le comprendre, les trous 34 qui les ajourent éventuellement sont de nature à faciliter la coupe correspondante.

Si nécessaire, un desserrage de la paroi de façade 14 de la cloison sèche 13 est possible.

Il suffit, pour ce faire, de refouler les pattes de serrage 20, en agissant par exemple sur leur languette 46, tel que schématisé pour l'une d'elles par une flèche F5 sur la figure 9B.

Bien entendu, la présente invention ne se limite pas à la forme de réalisation décrite et représentée, mais englobe toute variante d'exécution, dans les limites fixées par les revendications.

## Revendications

1. Boîte d'encastrement du genre comportant, d'une part, une paroi latérale (12), qui présente transversalement, en saillie vers l'extérieur, sur une partie au moins de son pourtour, un épaulement (17), et, d'autre part, au moins une patte de serrage (20), qui, attelée à une tirette (21), est destinée à être rapprochée de cet épaulement (17) pour coopération en serrage avec celui-ci, avec, intervenant entre la paroi latérale (12) et l'ensemble de serrage (22) que constituent la patte de serrage (20) et sa tirette (21), des moyens de crantage (23), **caractérisée en ce que**, venue d'un seul tenant de moulage avec la paroi latérale (12), la tirette (21) de la patte de serrage (20) forme initialement une seule et même pièce avec cette paroi latérale (12), tout en étant séparable de celle-ci.

2. Boîte d'encastrement suivant la revendication 1, **caractérisée en ce que** la tirette (21) de la patte de serrage (20) s'étend initialement en saillie vers l'extérieur par rapport à la paroi latérale (12).

3. Boîte d'encastrement suivant l'une quelconque des revendications 1, 2, **caractérisée en ce que** la tirette (21) de la patte de serrage (20) se raccorde à la paroi latérale (12) par une zone charnière (24) apte à permettre de la rabattre dans le volume intérieur (25) délimité par cette paroi latérale (12).

4. Boîte d'encastrement suivant la revendication 3, **caractérisée en ce que** la zone charnière (24) de la tirette (21) de la patte de serrage (20) intervient à la faveur d'une traverse (27), en forme d'anse, que cette tirette (21) présente à son extrémité opposée à la patte de serrage (20).

5. Boîte d'encastrement suivant l'une quelconque des revendications 3, 4, **caractérisée en ce que** la zone charnière (24) comporte deux lignes de pliage (28, 29), qui, parallèles l'une à l'autre, sont distantes l'une de l'autre.

6. Boîte d'encastrement suivant l'une quelconque des revendications 1 à 5, **caractérisée en ce que** la tirette (21) de la patte de serrage (20) se raccorde à la paroi latérale (12) le long du bord libre de celle-ci.

7. Boîte d'encastrement suivant la revendication 6, **caractérisée en ce que** l'épaulement (17) de la paroi latérale (12) appartient à une collerette (18), qui s'étend le long du bord libre de cette paroi latérale (12), et cette collerette (18) est localement interrompue au droit de la tirette (21) de la patte de serrage (20).

8. Boîte d'encastrement suivant l'une quelconque des revendications 1 à 7, **caractérisée en ce que** la tirette (21) de la patte de serrage (20) est séparable de la paroi latérale (12) au niveau de son raccordement à celle-ci.

9. Boîte d'encastrement suivant l'une quelconque des revendications 1 à 8, **caractérisée en ce que** les moyens de crantage (23) interviennent directement au droit de la patte de serrage (20).

10. Boîte d'encastrement suivant la revendication 9, **caractérisée en ce que** la paroi latérale (12) comporte une fente (38), qui s'étend sur une partie au moins de sa hauteur, la patte de serrage (20) appartient à un bloc de serrage (39), qui, à l'arrière de cette patte de serrage (20), présente au moins une rainure (40) lui permettant d'être engagé sur l'une des lèvres (41) de la fente (38) de la paroi latérale (12), et les moyens de crantage (23) comportent, d'une part, sur la paroi latérale (12), une série de crans (42) alignés le long de cette lèvre (41) de sa fente (38), et, d'autre part, sur le bloc de serrage (39), à la faveur de sa rainure (40), au moins un cran (43) apte à coopérer avec ceux (42) de la paroi latérale (12).

11. Boîte d'encastrement suivant la revendication 10, **caractérisé en ce que** les crans (42) de la paroi latérale (12) interviennent sur la surface extérieure de celle-ci.

12. Boîte d'encastrement suivant l'une quelconque des revendications 10, 11, **caractérisée en ce que** les crans (42) de la paroi latérale (12) sont dissymétriques, ces crans (42) présentant un flanc plus raide du côté du bord libre de cette paroi latérale (12) et un flanc moins raide du côté opposé au précédent.

13. Boîte d'encastrement suivant l'une quelconque des revendications 10 à 12, **caractérisée en ce que** le bloc de serrage (39) comporte lui aussi une série de crans (43).

14. Boîte d'encastrement suivant l'une quelconque des revendications 10 à 13, **caractérisée en ce que** le bloc de serrage (39) comporte, dos à dos, deux rainures (40) par lesquelles il peut être engagé sur les deux lèvres (41) de la fente (38) de la paroi latérale (12), et les moyens de crantage (23) comportent des crans (42) sur chacune de ces lèvres (41) et au moins un cran (43) dans chacune des rainures (40).

15. Boîte d'encastrement suivant la revendication 14, **caractérisée en ce que** le bloc de serrage (39) comporte, d'un côté de ses rainures (40), la patte de serrage (20), pour coopération avec l'épaulement (17) de la paroi latérale (12), sur la surface extérieure de celle-ci, et, de l'autre côté de ses rainures (40), une contreplaque de guidage (44), pour appui sur la surface intérieure de la paroi latérale (12).

16. Boîte d'encastrement suivant la revendication 15, **caractérisée en ce que** la contreplaque de guidage (44) est ajourée en forme de cadre.

17. Boîte d'encastrement suivant l'une quelconque des revendications 10 à 16, **caractérisée en ce que**, du côté du bord libre de la paroi latérale (12), la fente (38) de celle-ci est fermée par une barrette (50), en forme d'anse, propre à fournir un appui à la tirette (21) de la patte de serrage (20).

18. Boîte d'encastrement suivant l'une quelconque des revendications 10 à 17, **caractérisée en ce que**, du côté opposé au bord libre de la paroi latérale (12), la fente (38) de celle-ci est élargie.

19. Boîte d'encastrement suivant l'une quelconque des revendications 10 à 18, **caractérisée en ce que**, du côté opposé au bord libre de la paroi latérale (12), la fente (38) de celle-ci est au moins en partie occultée par une languette (48) pliable.

20. Boîte d'encastrement suivant l'une quelconque des revendications 1 à 19, **caractérisée en ce que** la fente (38) de la paroi latérale (12) s'étend suivant une génératrice de celle-ci.

21. Boîte d'encastrement suivant l'une quelconque des revendications 1 à 20, **caractérisée en ce qu'**il y a, en positions diamétralement opposées l'une par rapport à l'autre, deux pattes de serrage (20), à chacune desquelles est associée une tirette (21).

22. Boîte d'encastrement suivant les revendications 10 et 21, prises conjointement, **caractérisée en ce que** les deux blocs de serrage (39) comporte, chacun, en saillie, un ergot (51), pour leur imbrication relative lorsque les tirettes (21) des pattes de serrage (20) sont rabattues dans le volume intérieur (25) délimité par la paroi latérale (12).

## Patentansprüche

1. Unterputzdose, die einerseits eine Seitenwand (12) aufweist, die in Querrichtung nach außen vorstehend auf mindestens einem Teil ihres Umfangs eine Schulter (17) aufweist, und andererseits mindestens einen Klemmfuß (20), der an einem Zug (21) angekoppelt ist und dazu bestimmt ist, dieser Schulter (17) zum Zusammenwirken mit dieser durch Verklemmung genähert werden, wobei zwischen der Seitenwand (12) und der Klemmeinheit (22), die der Klemmfuß (20) und sein Zug (21) bilden, Verzahnungsmittel (23) vorgesehen sind, **dadurch gekennzeichnet, daß** der Zug (21) des Klemmfußes (20) mit der Seitenwand (12) einstückig geformt ist und anfangs mit dieser Seitenwand (12) ein und dasselbe Teil bildet, wobei er von dieser abtrennbar ist.

2. Unterputzdose nach Anspruch 1, **dadurch gekennzeichnet, daß** der Zug (21) des Klemmfußes (20) sich anfangs bezüglich der Seitenwand (12) nach außen vorstehend erstreckt.

3. Unterputzdose nach einem der Ansprüche 1, 2, **dadurch gekennzeichnet, daß** der Zug (21) des Klemmfußes (20) mit der Seitenwand (12) durch eine Scharnierzone (24) verbunden ist, die sein Einklappen in das von dieser Seitenwand (12) abgegrenzte Innenvolumen gestatten kann.

4. Unterputzdose nach Anspruch 3, **dadurch gekennzeichnet, daß** die Scharnierzone (24) des Zugs (21) des Klemmfußes (20) an einem henkelförmigen Steg (27) vorgesehen ist, den der Zug (21) an seinem dem Klemmfuß (20) entgegengesetzten Ende aufweist.

5. Unterputzdose nach einem der Ansprüche 3, 4, **dadurch gekennzeichnet, daß** die Scharnierzone (24) zwei zueinander parallele und voneinander entfernte Faltlinien (28, 29) aufweist.

6. Unterputzdose nach einem der Ansprüche 1 bis 5, **dadurch gekennzeichnet, daß** der Zug (21) des Klemmfußes (20) mit der Seitenwand (12) längs ihres freien Rands verbunden ist.

7. Unterputzdose nach Anspruch 6, **dadurch gekennzeichnet, daß** die Schulter (17) der Seitenwand (12) zu einem Flansch (18) gehört, der sich längs des freien Rands dieser Seitenwand (12) erstreckt, und dieser Flansch (18) örtlich auf Höhe des Zugs (21) des Klemmfußes (20) unterbrochen ist.

8. Unterputzdose nach einem der Ansprüche 1 bis 7, **dadurch gekennzeichnet, daß** der Zug (21) des Klemmfußes (20) von der Seitenwand (12) auf Höhe seiner Verbindung mit dieser abtrennbar ist.

9. Unterputzdose nach einem der Ansprüche 1 bis 8, **dadurch gekennzeichnet, daß** die Verzahnungsmittel (23) direkt auf Höhe des Klemmfußes (20) vorgesehen sind.

10. Unterputzdose nach Anspruch 9, **dadurch gekennzeichnet, daß** die Seitenwand (12) einen Schlitz (38) aufweist, der sich über mindestens einen Teil ihrer Höhe erstreckt, der Klemmfuß (20) zu einem Klemmblock (39) gehört, der hinter diesem Klemmfuß (20) mindestens eine Nut (40) aufweist, die ihm gestattet, auf eine der Lippen (41) des Schlitzes (38) der Seitenwand (12) aufgesteckt zu werden, und die Verzahnungsmittel (23) einerseits auf der Seitenwand (12) eine Reihe von Zähnen (42), die längs dieser Lippe (41) ihres Schlitzes (38) in einer Linie liegen, und andererseits auf dem Klemmblock (39) in seiner Nut (40) mindestens einen Zahn (43) aufweisen, der mit denen (42) der Seitenwand (12) zusammenwirken kann.

11. Unterputzdose nach Anspruch 10, **dadurch gekennzeichnet, daß** die Zähne (42) der Seitenwand (12) auf ihrer Außenfläche vorgesehen sind.

12. Unterputzdose nach einem der Ansprüche 10, 11, **dadurch gekennzeichnet, daß** die Zähne (42) der Seitenwand (12) unsymmetrisch sind, wobei diese Zähne (42) eine steilere Flanke auf der Seite des freien Rands der Seitenwand (12) und eine weniger steile Flanke auf der der vorhergehenden entgegengesetzten Seite aufweisen.

13. Unterputzdose nach einem der Ansprüche 10 bis 12, **dadurch gekennzeichnet, daß** der Klemmblock (39) ebenfalls eine Reihe von Zähnen (43) aufweist.

14. Unterputzdose nach einem der Ansprüche 10 bis 13, **dadurch gekennzeichnet, daß** der Klemmblock (39) Rücken an Rücken zwei Nuten (40) aufweist, mit denen er auf die beiden Lippen (41) des Schlitzes (38) der Seitenwand (12) aufgesteckt werden kann, und die Verzahnungsmittel (23) Zähne (42) auf jeder dieser Lippen (41) und mindestens einen Zahn (43) in jeder der Nuten (40) aufweisen.

15. Unterputzdose nach Anspruch 14, **dadurch gekennzeichnet, daß** der Klemmblock (39) auf der einen Seite von seinen Nuten (40) den Klemmfuß (20) zum Zusammenwirken mit der Schulter (17) der Seitenwand (12) auf deren Außenfläche und auf der anderen Seite von seinen Nuten (40) eine Führungsgegenplatte (44) zum Anliegen an der Innenfläche der Seitenwand (12) aufweist.

16. Unterputzdose nach Anspruch 15, **dadurch gekennzeichnet, daß** die Führungsgegenplatte (44) rahmenförmig durchbrochen ist.

17. Unterputzdose nach einem der Ansprüche 10 bis 16, **dadurch gekennzeichnet, daß** der Schlitz (38) der Seitenwand (12) auf der Seite ihres freien Rands durch einen henkelförmigen Steg (50) geschlossen ist, der eine Auflage für den Zug (21) des Klemmfußes (20) liefern kann.

18. Unterputzdose nach einem der Ansprüche 10 bis 17, **dadurch gekennzeichnet, daß** der Schlitz (38) der Seitenwand (12) auf der ihrem freien Rand entgegengesetzten Seite verbreitert ist.

19. Unterputzdose nach einem der Ansprüche 10 bis 18, **dadurch gekennzeichnet, daß** der Schlitz (38) der Seitenwand (12) auf der ihrem freien Rand entgegengesetzten Seite mindestens teilweise durch eine umbiegbare Zunge (48) abgedeckt ist.

20. Unterputzdose nach einem der Ansprüche 1 bis 19, **dadurch gekennzeichnet, daß** der Schlitz (38) der Seitenwand (12) sich längs einer Erzeugenden von dieser erstreckt.

21. Unterputzdose nach einem der Ansprüche 1 bis 20, **dadurch gekennzeichnet, daß** in zueinander diametral entgegengesetzten Stellungen zwei Klemmfüße (20) vorgesehen sind, deren jedem ein Zug (21) zugeordnet ist.

22. Unterputzdose nach den Ansprüche 10 und 21 zusammen, **dadurch gekennzeichnet, daß** die beiden Klemmblöcke (39) jeweils vorstehend eine Nase (51) für ihr gegenseitiges Ineinandergreifen aufweisen, wenn die Züge (21) der Klemmfüße (20) in das von der Seitenwand (12) abgegrenzte Innenvolumen (25) hineingeklappt sind.

## Claims

1. Flush-mounting box of the type comprising, on the one hand, a side wall (12) which has, transversely protruding towards the exterior, over at least a part of its periphery, a shoulder (17) and, on the other hand, at least one clamping piece (20) which, coupled to a pulling striping strip (21), is intended to be brought close to this shoulder (17) in order to cooperate in clamping with the latter with, positioned between the side wall (12) and the clamping assembly (22) formed by the clamping piece (20) and its pulling strip (21), notch engagement means (23), **characterized in that**, being produced as a one-piece moulding with the side wall (12), the pulling strip (21) of the clamping piece (20) initially forms a single piece with this side wall (12) whilst being separable from the latter.

2. Flush-mounting box according to claim 1, **characterized in that** the pulling strip (21) of the clamping piece (20) initially extends as an outward protrusion with respect to the side wall (12).

3. Flush-mounting box according to either one of claims 1 and 2, **characterized in that** the pulling strip (21) of the clamping piece (20) is connected to the side wall (12) by a hinge zone (24) capable of allowing it to be folded down into the internal volume (25) delimited by this side wall (12).

4. Flush-mounting box according to claim 3, **characterized in that** the hinge zone (24) of the pulling strip (21) of the clamping piece (20) is attached by means of a handle-shaped cross-piece (27), which this pulling strip (21) has at its end opposite to that of the clamping piece (20).

5. Flush-mounting box according to either one of claims 3 and 4, **characterized in that** the hinge zone (24) comprises two folding lines (28, 29) which are parallel with one another and are at a distance from one another.

6. Flush-mounting box according to any one of claims 1 to 5, **characterized in that** the pulling strip (21) of the clamping piece (20) is connected to the side wall (12) along the free edge of the latter.

7. Flush-mounting box according to claim 6, **characterized in that** the shoulder (17) of the side wall (12) is part of a collar (18) which extends along the free edge of that side wall (12) and this collar (18) is locally interrupted in line with the pulling strip (21) of the clamping piece (20).

8. Flush-mounting box according to any one of claims 1 to 7, **characterized in that** the pulling strip (21) of the clamping piece (20) is separable from the side wall (12) at the place where it is connected to the latter.

9. Flush-mounting box according to any one of claims 1 to 8, **characterized in that** the notch engagement means (23) occur directly at right angles with the clamping piece (20).

10. Flush-mounting box according to claim 9, **characterized in that** the side wall (12) comprises a slot (38) which extends over at least a part of its height, the clamping piece (20) is part of a clamping unit (39) which, at the rear of this clamping piece (20) has at least one groove (40) allowing it to be engaged on one of the sides (41) of the slot (38) of the side wall (12) and the notch engagement means (23) comprise, on the one hand, on the side wall (12) a series of notches (42) aligned along that side (41) of its slot (38) and, on the other hand, on the clamping unit (39), in its groove (40), at least one notch (43) capable of cooperating with those (42) of the side wall (12).

11. Flush-mounting box according to claim 10, **characterized in that** the notches (42) of the side wall (12) occur on the outside surface of the latter.

12. Flush-mounting box according to either one of claims 10 and 11, **characterized in that** the notches (42) of the side wall (12) are asymmetric, these notches (42) having a steeper edge on the side facing the free edge of this side wall (12) and a less steep edge on the side opposite to the former one.

13. Flush-mounting box according to any one of claims 10 to 12, **characterized in that** the clamping unit (39) itself also comprises a series of notches (43).

14. Flush-mounting box according to any one of claims 10 to 13, **characterized in that** the clamping unit (39) comprises, back to back, two grooves (40), by which it can be engaged on the two sides (41) of the slot (38) of the side wall (12), and the notch engagement means (23) comprise notches (42) on each of these sides (41) and at least one notch (43) in each of the grooves (40).

15. Flush-mounting box according to claim 14, **characterized in that** the clamping unit (39) comprises, on one side of its grooves (40), the clamping piece (20) for cooperation with the shoulder (17) of the side wall (12), on the outside surface of the latter and, on the other side of its grooves (40), a guidance counter-plate (44), for bearing against the inside surface of the side wall (12).

16. Flush-mounting box according to claim 15, **characterized in that** the guidance counter-plate (44) has an opening giving it the shape of a frame.

17. Flush-mounting box according to any one of claims 10 to 16, **characterized in that**, on the side of the free edge of the side wall (12), the slot (38) of the latter is closed by a handle-shaped bar (50) capable of providing a support to the pulling strip (21) of the clamping piece (20).

18. Flush-mounting box according to any one of claims 10 to 17, **characterized in that**, on the side opposite the free edge of the side wall (12), the slot (38) of the latter is widened.

19. Flush-mounting box according to any one of claims 10 to 18, **characterized in that**, on the side opposite the free edge of the side wall (12), the slot (38) of the latter is at least partly covered by a pliable tongue (48).

20. Flush-mounting box according to any one of claims 1 to 19, **characterized in that** the slot (38) of the side wall (12) extends along a generatrix of the latter.

21. Flush-mounting box according to any one of claims 1 to 20, **characterized in that** there is, in positions diametrically opposite to one another, two clamping pieces (20), with each of which there is associated a pulling strip (21).

22. Flush-mounting box according to claims 10 and 21, considered jointly, **characterized in that** the two clamping units (39) each comprise a protruding pin (51) for their relative imbrication when the pulling strips (21) of the clamping pieces (20) are folded down into the internal volume (25) delimited by the side wall (12).
